# EUROPEAN PATENT SPECIFICATION

(11) **EP 1 177 968 B1**
(45) Date of publication and mention of the grant of the patent: **12.10.2005**
(21) Application number: 01117935.5
(22) Date of filing: 24.07.2001
(51) Int. Cl.: B62D 21/15

(54) **Impact absorbing structure for car body front of automobile**
Stossenergieabsorbierende Struktur für ein Kraftfahrzeug
Structure pour l'absorption de l'énergie de choc pour un véhicule à moteur

(30) Priority: 31.07.2000 JP 2000232416
(43) Date of publication of application: 06.02.2002
(73) Proprietor: Daihatsu Motor Co., Ltd., Osaka Prefecture (JP)
(72) Inventor: Kubota, Kazuhiko, Ikeda City, Osaka Prefecture (JP); Watanabe, Taketsugu, Ikeda City, Osaka Prefecture (JP); Suyama, Takao, Ikeda City, Osaka Prefecture (JP)
(74) Representative: Hering, Hartmut

(56) References cited:
- EP-A- 0 990 577
- DE-B- 2 053 151
- US-A- 5 246 263

## Description

The present invention relates to an impactive force absorbing structure for the car body front of an automobile, said car body being provided with front pillars and apron members projecting forward from the front pillars, wherein when an impactive force is given from front to said apron member in the event of an automobile collision or the like, said impactive force is absorbed by the plastic deformation of said apron member.

Such a car body is shown in EP 0 990 577 which discloses the preamble of claim 1.

Concerning the car body front of an automobile, there has heretofore been what is shown in Japanese Patent Unexamined Publication 2000-108946.

According to said publication, said car body front comprises a pair of side members respectively suspending the front wheels and extending longitudinally of the car body, a pair of front pillars vertically extending and supported at their lower ends by the longitudinal middle portions of said side members, a pair of apron members disposed above said side members and projecting forward from said front pillars, and a front fender apron supported to straddle said side members and apron members and covering said front wheels from above, the rear ends of said apron members being firmly joined to said front pillars.

Further, in the above arrangement, normally, the suspension for suspending the front wheel from the side member is provided with a vertically extending damper. The upper end of this damper is supported by a support formed with part of said front fender apron, and said front wheel is supported at the lower end of said damper.

During traveling of the automobile, an impactive force which the front wheel receives from the road surface is absorbed by said damper; however, a heavy load is given from said front wheel to said support via the damper. For this reason, said support is given a high strength from the necessity of counteracting said heavy load.

In this connection, said prior art presents the following problem.

That is, said apron members project forward from said front pillars and the rear ends of said apron members are firmly joined to said front pillars.

Therefore, the car body receives a severe impactive force from front in the event of an automobile collision or the like and when this impactive force is applied to said apron member, stress concentration tends to occur in the portion of said apron member in the vicinity of the front of the rear end region thereof, so that the apron member would bend at said portion alone.

However, if the apron member bends at said portion alone, as described above, the amount of deformation by which the apron member is to be plastically deformed becomes insufficient. Therefore, the absorption of said impactive force by the plastic deformation of the car body would be insufficient.

An object of the present invention is to ensure that when a car body receives a severe impactive force from front in the event of an automobile collision or the like, the absorption of the impactive force by the plastic deformation of the car body is more sufficiently effected.

The invention provides an arrangement for an automobile which comprises a pair of right and left side members respectively suspending the front wheels and extending longitudinally of the car body, a pair of right and left front pillars vertically extending and supported at their lower ends by the longitudinal middle portions of said side members, a pair of right and left apron members disposed above said side members and projecting forward from said front pillars, and a front fender apron at each side of the car body supported to straddle said side member and apron member and covering said front wheel from above, wherein
as seen in a plan view of the car body, when an imaginary straight line which connects the front and rear ends of at least one of both lateral surfaces of said apron member is set, the longitudinal intermediate portion of said apron member in said one lateral surface is recessed from said imaginary straight line to form a recess.

Other objects, arrangements, functions and effects of the present invention will become more apparent from the detailed description of the invention to be later given on the basis of the attached drawings.

### BRIEF DESCRIPTION OF THE DRAWINGS

The drawings show a preferred embodiment of the invention.
Fig. 1 is a fragmentary plan view of a car body front;

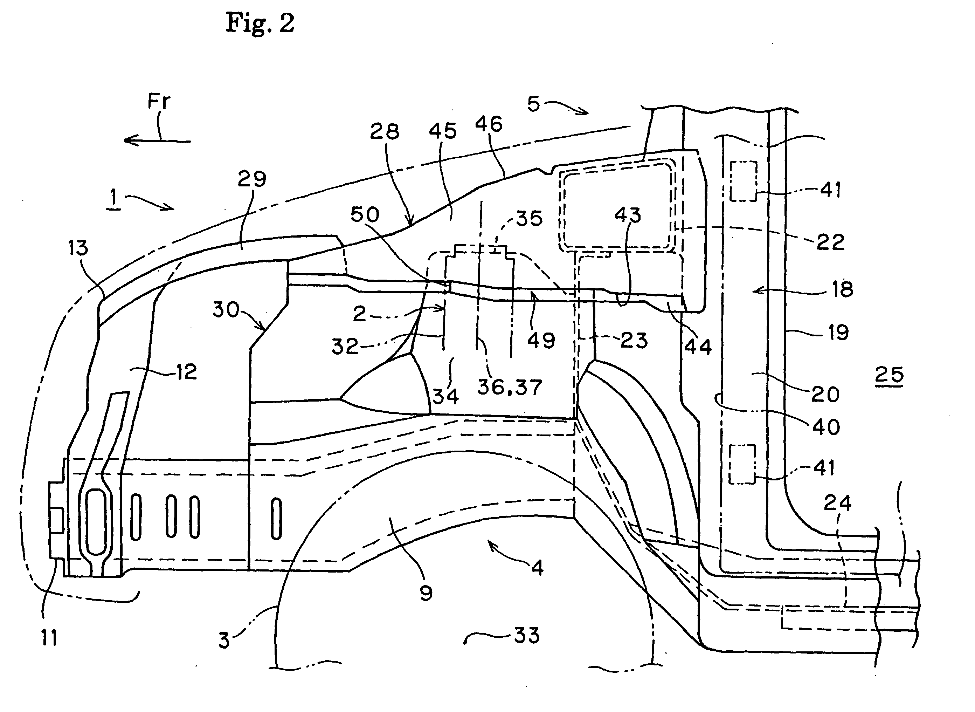

Fig. 2 is a fragmentary side view of the car body front;

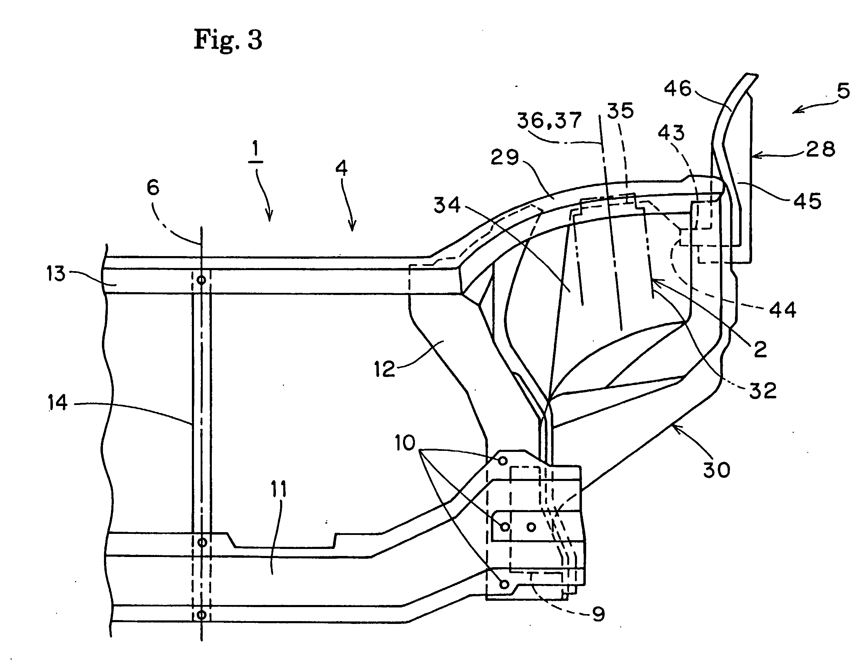

Fig. 3 is a fragmentary front view of the car body front; and

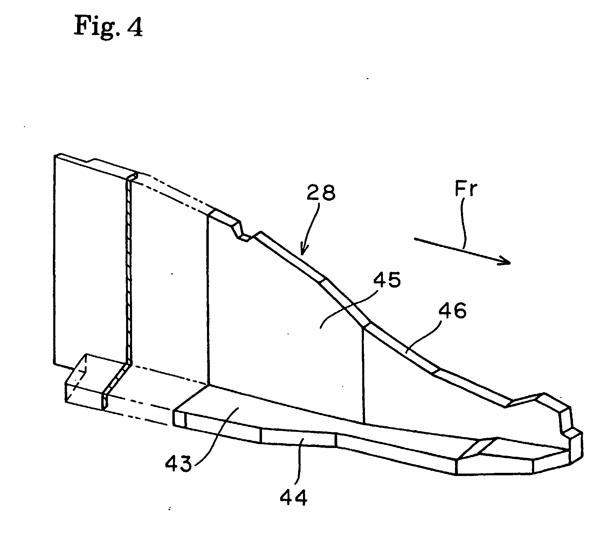

Fig. 4 is a fragmentary perspective view of an apron member.

In the drawings, the character 1 denotes the car body, of metal sheet, of an automobile, and an arrow Fr indicates the forward direction of the car body 1. The term "right and left" used hereinafter refers to the direction of the width of the car body 1 as seen in said forward direction.

The car body 1 comprises a car body frame 4 constituting the lower portion and supported on the road surface through front wheels 3 and rear wheels suspended from a suspension 2, and a car body main body 5 disposed on the upper side of said car body frame 4 and supported by said car body frame 4. The car body frame 4 and the car body main body 5 are substantially symmetrical with respect to an imaginary vertical plane 6 passing though the center in the direction of the width of the car body 1.

The front portion of the car body frame 4 comprises a pair of right and left side members 9 constituting the right and left side portions of said car body frame 4, suspending the front wheels 3 and extending longitudinally of the car body 1, a front cross member 11 extending widthwise of the car body 1 and joined at each end thereof to the front end of each said side member 9 by fasteners 10, a pair of right and left radiator supports 12 constituting the right and left front sides of said car body frame 4, vertically extending and joined at each lower end thereof to the front end of each said side member 9, an upper cross member 13 extending widthwise of the car body 1 and joined at each end thereof to the upper end of each said radiator support 12, and a center member 14 joining said cross member 11 and upper cross member 13 at their respective longitudinal intermediate portions.

Said car body main body 5 is provided with right and left side walls 18 constituting the right and left outer sides of said car body main body 5 and each positioned at the back of the front portion of said side member 9. The front portion of each of these side walls 18 is formed with a door opening 19 extending through and widthwise of the car body 1.

The front opening edge of said door opening 19 which is the front end of said side wall 18 is a front pillar 20. The front pillar 20 vertically extends a long distance and has a sufficient strength, and is supported at the lower end thereof by the longitudinal intermediate portion of said side member 9.

Further, said car body main body 5 comprises a front cowl 22 extending widthwise of the car body 1 and joined at each end thereof to the vertical intermediate portion of each said front pillar 20, a dash panel 23 extending downward from said front cowl 22, and a floor panel 24 disposed between said right and left side walls 18, supported on said side members 9 and joined at the front end thereof to the extended end (the lower end) of said dash panel 23.

The inner space of the car body main body 5 surrounded by said right and left side walls 18, front cowl 22, dash panel 23 and floor panel 24 defines the car interior 25, and said door opening 19 establishes communication between the inside and outside of said car interior 25.

Further, said car body main body 5 has a pair of right and left apron members 28. Each of these apron members 28 is positioned above and laterally outward of said side member 9 and firmly joined at the rear end thereof to the longitudinal intermediate portion of said front pillar 20 and to the end of the front cowl 22. Further, each said apron member 28 projects from the longitudinal intermediate portion of said front pillar 20 forwardly, substantially horizontally and linearly.

Further, said car body main body 5 is provided with a pair of right and left upper side members 29 for joining the projecting end of each said apron member 28 to each end of said upper cross member 13, and a front fender apron 30 supported at each side of the car body 1 to straddle said side member 9 and apron member 28 and covering said front wheel 3 from above, each said upper side member 29 extending inward from the projecting end of each said apron member 28 as it extends forwardly of the car body 1.

Said front fender apron 30 is joined at the lower end edge thereof to said side member 9, at the upper end edge thereof to said apron member 28, and at the rear end edge thereof to said dash panel 23. Each said joining is firmly effected, whereby the members 9, 23, 28 and 30 joined together as described above are reinforced by each other, each having a great strength.

Each said suspension 2 has a damper 32 which vertically extends long and which is longitudinally extensible. Longitudinally of said car body 1, said damper 32 is positioned in substantially the same place as that in which the rotation center 33 of said front wheel 3 is positioned. Further, widthwise of said car body 1, said damper 32 is positioned in a space defined between said front wheel 3 and the front fender apron 30.

On the other hand, longitudinally of the car body 1, part of said front fender apron 30 positioned in substantially the same place as that in which the damper 32 of said suspension 2 is positioned, upwardly bulges to form a bulge 34. The bulging end (upper end) of the bulge 34 is formed with a support 35 for supporting the upper end of said damper 32. The upper end of said damper 32 is fitted into said bulge 34 from thereunder, and the upper end of the damper 32 is supported on said support 35 as by fastening. Further, the axle of said front wheel 3 is supported by the lower end of said damper 32 and the front wheel 3 is supported by the lower end of the damper 32.

In the above case, the portion of said support 35 through which the axis 36 of the damper 32 extends corresponds to the center 37 of said support 35. Further, said support 35, together with said bulge 34, is given a sufficiently great strength and rigidity from the necessity of supporting said damper 32.

A door 40 is provided for opening/closing the door opening 19 from the outer lateral side of the car body 1. This door 40 is pivotally supported at the front end thereof on said front pillar 20 by a pair of upper and lower hinges 41, 41 so that its rear portion is movable back and forth laterally outward of the car body 1. The front end edge of said door 40 is positioned in the vicinity of the rear of the rear end region of said apron member 28 and in the vicinity of the outer lateral side.

Each said apron member 28 comprises a transverse member 43 constituting the lower portion of said apron member 28 and extending longitudinally of the car body 1 and extending widthwise of the car body 1 and substantially horizontally, and a flange 44 at the transverse member 43 integrally projecting downward from the widthwise inner end edge of the car body 1, a longitudinal member 45 at the transverse member 43 extending substantially vertically upward and integrally from the widthwise outer end edge of the car body 1, and a flange 46 integrally projecting from the projecting end of the longitudinal member 45 laterally outward of the car body 1, each said apron member 28 being formed by pressing a metal sheet.

Each section of said apron member 28 longitudinally of the car body 1 is made substantially L-shaped by the transverse member 43 and longitudinal member 45 and has a sufficient strength and rigidity. Further, the inner end edge and flange 44 of the transverse member 43 are joined to the upper end edge of the front fender apron 30.

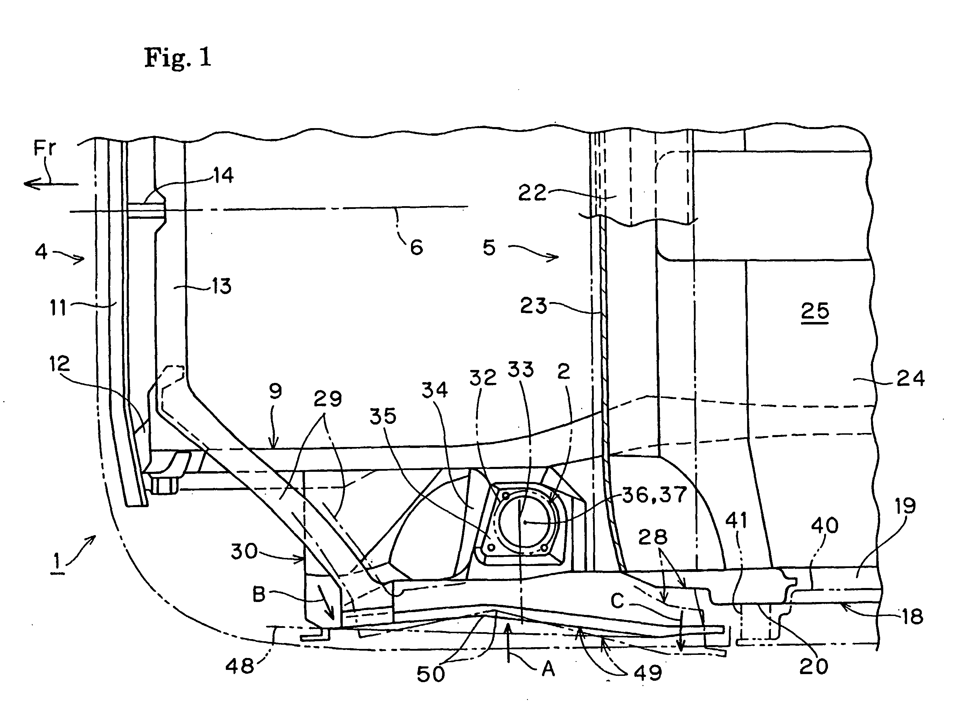

In a plan view (Fig. 1) of the car body 1, when an imaginary straight line 48 connecting the front and rear ends of at least one of the right and left lateral surfaces of each said apron member 28, more particularly the lateral surface on the outer lateral side of the car body 1 is set, the respective longitudinal intermediate portions of the transverse member 43, longitudinal member 45 and flange 46 of said apron member 28 at said one lateral surface are recessed from said imaginary line 48 to form recesses 49.

In a plan view (Fig. 1) of the car body 1, one of the respective lateral surfaces of the transverse member 43, longitudinal member 45 and flange 46 of said apron member 28 extends substantially linearly from the front and rear ends toward the respective bottoms 50 of the recesses 49, moving gradually away from the imaginary straight line 48.

According to the above arrangement, in a plan view of the car body 1, when the imaginary straight line 48 connecting the front and rear ends of at least one of the two lateral surfaces of said apron member 28 is set, the longitudinal intermediate portion of said apron member 28 in said one lateral surface is recessed from the imaginary straight line 48 to form the recess 49.

In this case, said apron member 28 projects forward from said front pillar 20, and the rear end of said apron member 28 is firmly joined to said front pillar 20 and front cowl 22. Therefore, the car body 1 receives a severe impactive force from front in the event of an automobile collision or the like and when this impactive force is applied to said apron member 28, stress concentration tends to occur in the portion of said apron member 28 in the vicinity of the front of the rear end region thereof, so that the apron member 28 would bend at said portion alone.

Accordingly, the intermediate portion of the apron member 28 is recessed to form the recess 49, as described above. As a result, when given an impactive force from front, the apron member 28, rather than being bent in said portion alone as described above, has large stress produced also in the intermediate portion thereof, so that the apron member 28 is also bent in the intermediate portion thereof.

Therefore, when the car body 1 receives a severe impactive force from front in the event of an automobile collision or the like, said apron member 28 will bend in a plurality of places and the amount of plastic deformation of the apron member 28 will correspondingly increase; thus, the absorption of impactive force by plastic deformation of the car body 1 is more sufficiently effected.

Further, the width dimension of longitudinal member 45 of the apron member 28 as seen in the vertical direction is substantially gradually increased from the front to rear end thereof.

Therefore, when the apron member 28 is given an impactive force directed from the front end thereof toward the rear, buckling successively occurs from the front to rear end thereof.

Accordingly, the amount of plastic deformation of said apron member 28 further increases, thus ensuring more sufficient absorption of the impactive force by plastic deformation of the car body 1.

In addition, since said apron member 28 has no radical changes in modulus of section over the region from the front to rear end thereof, the strength and rigidity of the car body 1 during the normal travel can be kept satisfactory even if the recess 49 is formed.

Further, as shown in the figures, more particularly, one lateral surface of said apron member 28 corresponds to the lateral surface of the outer lateral side of the car body 1.

Therefore, when the apron member 28 receives an impactive force from front and bends at its intermediate portion, as described above, the direction of bending is laterally inward of the car body 1 (arrow A, dash-dot line, in Fig. 1).

Further, said upper side member 29 extending laterally inward as it extends forwardly of the car body 1 joins the front end of said apron member 28 to said upper cross member 13. Therefore, when an impactive force is given to the front end of said apron member 28 through said upper cross member 13 and upper side member 29, the front end of said apron member 28 is directed to the outer lateral side of the car body 1 (arrow B, dash-dot line, in Fig. 1). Thus, as the result of the reaction, the direction of bending of the intermediate portion of the apron member 28 is laterally inward of the car body 1 (arrow A).

And, when the intermediate portion of the apron member 28 is bent laterally inward, as described above, the front fender apron 30 joined to said apron member 28 is given mainly a compressive force, not a tensile force, whereby the front fender apron 30 is also fully plastically deformed.

Thus, the amount of plastic deformation of the car body 1 increases, and the absorption of the impactive force by this plastic deformation is sufficiently effected.

Further, when the intermediate portion of the apron member 28 is bent laterally inward, as described above, as the result of the reaction, the rear end, which is the free end, of the apron member 28 is turned laterally outward of the car body 1 around the support 35 formed in the front fender apron 30 and / or in the end of the front cowl 22 having high strength and rigidity (arrow C, in dash-dot line, in Fig. 1).

As a result, on bending of the apron member 28, the rear end of the apron member 28 is prevented from decreasing the width dimension of the car interior 25 and is also prevented from contacting the door 40 to obstruct the opening of the door 40.

Further, the suspension 2 for suspending the front wheel 3 from said side member 9 has the vertically extending damper 32, and part of said front fender apron 30 is formed with the support 35 for supporting the upper end of said damper 32 on part of said front fender apron 30, while the lower end of said damper 32 supports said front wheel 3. In this arrangement, the bottom 50 of said recess 49 is positioned forwardly of the center 37 of said support 35.

In this case, the support 35 formed in part of said front fender apron 30 is given a large strength from the necessity of counteracting a heavy load from the damper 32. If, therefore, the bottom 50 of the recess 49 in the apron member 28 joined to the front fender apron 30 were positioned longitudinally of the car body 1 and in the vicinity of the support 35, the bottom 50 of the recess 49 would be strongly reinforced by the support 35, making it difficult to obtain said bending.

Accordingly, as described above, the bottom 50 of the recess 49 is offset to be positioned forwardly of the center 37 of said support 35. As a result, when the apron member 28 is given an impactive force from front, a large stress tends to be produced in the bottom 50 of the apron member 28 without being impeded by the strength of said support 35, so that first, the intermediate portion of the apron member 28 is bent and then the portion of the apron member 28 in the vicinity of the front of the rear end region thereof, and the front fender apron 30 are bent.

Therefore, irrespective of the presence of said support 30 of large strength, the absorption of the impactive force by plastic deformation of said car body 1 is sufficiently effected.

Further, in said apron member 28, the portion positioned forwardly and in the vicinity of said bulge 34 is a portion in which a larger stress corresponding to the increased strength of the bulge 34 tends to occur. For this reason, the bottom 50 of the recess 49 is positioned in said portion positioned forwardly and in the vicinity of said bulge 34.

Thus, when said apron member 28 is given an impactive force from front, said portion of said apron member 28 has a lager stress reliably produced therein and is bent.

Therefore, the absorption of an impactive force by the plastic deformation of the car body 1 is more sufficiently effected.

In addition, what has been described so far relates to the example shown in the drawings. However, in addition to or in place of said recess 49 formed in the lateral surface of the apron member 28 on the outer lateral side of the car body 1, there may be formed a recess 49 in the lateral surface on the inner lateral side. Further, said recess 49 may be of arcuate recessed shape as seen in a plan view of the car body 1. Further, said recess 49 may be formed in any member(s) selected from the group consisting of the transverse member 43, flange 44 and longitudinal member 45 of the apron member 28.

Further, the invention may be achieved by suitably combining the individual constituent members described above.

## Claims

1. An impactive force absorbing structure for the car body front of an automobile which comprises a pair of right and left side members (9) for respectively suspending the front wheels (3) and for extending longitudinally of the car body (1), a pair of right and left front pillars (20) vertically extending and supported at their lower ends by the longitudinal middle portions of said side members (9), a pair of right and left apron members (28) disposed above said side members (9) and projecting forward from said front pillars (20), and a front fender apron (30) at each side of the car body (1) supported to straddle said side member (9) and apron member (28) and covering said front wheel (3) from above, **characterized in that** as seen in a plan view of the car body (1), when an imaginary straight line (48) which connects the front and rear ends of at least one of both lateral surfaces of said apron member (28) is set, the longitudinal intermediate portion of said apron member (28) in said one lateral surface is recessed from said imaginary straight line (48) to form a recess (49).

2. An impactive force absorbing structure for the car body front of an automobile, as set forth in Claim 1, **characterized in that** one lateral surface of said apron member (28) is the lateral surface on the outer lateral side of the car body (1).

3. An automobile comprising a suspension (2) suspending the front wheel (3) on said side member (9), said suspension (2) being provided with a vertically extending damper (32), a support (35) formed on part of the front fender apron (30) for supporting the upper end of said damper (32), the lower end of said damper (32) supporting the front wheel (3),
wherein an impactive force absorbing structure for the car body front of the automobile, as set forth in Claim 1 or 2 is provided and said recess (49) has a bottom (50) which is positioned forwardly of the center (37) of said support (35).

## Patentansprüche

1. Stoßenergieabsorbierende Struktur für die Autokarosserievorderseite eines Automobils, welche Struktur ein Paar von rechten und linken Seitenelementen (9) zum jeweiligen Aufhängen der Vorderräder (3) und zum Erstrecken in Längsrichtung von der Autokarosserie (1), ein Paar von rechten und linken vorderen Säulen (20), die sich in vertikaler Richtung erstrecken und an ihren unteren Enden durch die longitudinalen Mittenteile der Seitenelemente (9) gestützt sind, ein Paar von rechten und linken Stehblechelementen (28), die über den Seitenelementen (9) angeordnet sind und von den vorderen Säulen (20) nach vorn vorstehen, und ein vorderes Motorraum-Stehblech (30) auf jeder Seite der Autokarosserie (1), das derart gelagert ist, dass es sich über das Seitenelement (9) und das Stehblechelement (28) erstreckt, und das das Vorderrad (3) von oben bedeckt, aufweist, **dadurch gekennzeichnet, dass**
wie es in einer Draufsicht der Autokarosserie (1) zu sehen ist, wenn eine imaginäre gerade Linie (48), die die vorderen und hinteren Enden von wenigstens einer von beiden lateralen Oberflächen des Stehblechelements (28) verbindet, eingestellt ist, der longitudinale Mittenteil des Stehblechelements (28) in der einen lateralen Oberfläche von der imaginären geraden Linie (48) aus vertieft ist, um eine Vertiefung (49) zu bilden.

2. Stoßenergieabsorbierende Struktur für die Autokarosserievorderseite eines Automobils nach Anspruch 1, **dadurch gekennzeichnet, dass** eine laterale Oberfläche des Stehblechelements (28) die laterale Oberfläche auf der äußeren lateralen Seite der Autokarosserie (1) ist.

3. Automobil mit einer Aufhängung (2), die das Vorderrad (3) an dem Seitenelement (9) aufhängt, wobei die Aufhängung (2) versehen ist mit einem sich in vertikaler Richtung erstreckenden Stoßdämpfer (32) und einer Stütze (35), die an einem Teil des Motorraum-Stehblechs (30) zum Stützen des oberen Endes des Stoßdämpfers (32) ausgebildet ist, wobei das untere Ende des Stoßdämpfers (32) das Vorderrad (3) stützt,
wobei eine stoßenergieabsorbierende Struktur für die Autokarosserievorderseite des Automobils nach Anspruch 1 oder 2 vorgesehen ist und die Vertiefung (49) einen Boden (50) hat, der von dem Zentrum (37) der Stütze (35) aus in Richtung nach vorn positioniert ist.

## Revendications

1. Structure conçue pour absorber une force de choc destinée à la partie avant de la caisse d'une automobile, comprenant une paire d'éléments latéraux droit et gauche (9), pour suspendre respectivement les roues avant (3) et se prolongeant longitudinalement par rapport à la caisse d'automobile (1), une paire de montants avant droit et gauche (20), se prolongeant verticalement et supportés à leurs extrémités par les parties longitudinales médianes desdits éléments latéraux (9), une paire d'éléments de tablier droit et gauche (28) disposés au-dessus desdits éléments latéraux (9) et dépassant vers l'avant à partir desdits montants avant (20), un tablier d'aile avant (30) de chaque côté de la caisse d'automobile (1) supporté de façon à chevaucher ledit élément latéral (9) et un élément de tablier (28) et couvrant ladite roue avant (3) par le dessus, **caractérisée par le fait que**, comme on peut le voir d'après une vue de dessus de la caisse d'automobile (1), lorsque l'on trace une ligne droite imaginaire (48) reliant les extrémités avant et arrière d'au moins une ou bien des deux surfaces latérales dudit élément de tablier (28), la partie longitudinale intermédiaire dudit élément de tablier (28) sur l'une des dites surfaces latérales est en retrait par rapport à ladite ligne droite imaginaire (48), pour former un creux (49).

2. Structure conçue pour absorber une force de choc destinée à la partie avant de la caisse d'une automobile selon la revendication 1, **caractérisée par le fait qu'**une surface latérale dudit élément de tablier (28) correspond à la surface latérale de la face latérale extérieure de la caisse (1).

3. Automobile comprenant une suspension (2) suspendant la roue avant (3) sur ledit élément latéral (9), ladite suspension (2) étant équipée d'un amortisseur se prolongeant verticalement (32), d'un support (35) formé sur une partie de tablier d'aile avant (30) afin de supporter l'extrémité supérieure dudit amortisseur (32), l'extrémité inférieure dudit amortisseur (32) supportant la roue avant (3),
dans lequel une structure conçue pour absorber une force de choc destinée à la partie avant de la caisse d'une automobile, comme décrit dans la revendication 1 ou 2 est prévue, et ledit creux (49) présentant une partie inférieure (50) positionnée en avant du centre (37) dudit support (35).
